# EUROPÄISCHE PATENTANMELDUNG

(11) **EP 0 810 385 A2**
(43) Veröffentlichungstag der Anmeldung: **03.12.1997**
(21) Anmeldenummer: 97108255.7
(22) Anmeldetag: 22.05.1997
(51) Int. Cl.: F16D 69/04

(54) **Reibeinheit mit Reibbelagfederung,z. b. für Kupplungen oder Bremsen**

(30) Priorität: 31.05.1996 DE 19621972
(71) Anmelder: Diehl Remscheid GmbH & Co., D-42857 Remscheid (DE); Raybestos Industrie-Produkte GmbH, D-54497 Morbach (DE)
(72) Erfinder: Haberland, Norbert, Dr., 53881 Euskirchen (DE); Scheffer, Gerhard, 53945 Bl.-Rohr (DE); Silva, David, 53947 Tondorf (DE); Gebhardt, Günther, 54589 Stadtkyll (DE); Schulz, Norbert, 51709 Marienheide (DE); Bergheim, Michael, Dr., 54497 Morbach (DE)
(74) Vertreter: Hofmann, Gerhard, Dipl.-Ing. Patentassessor

(57) **Zusammenfassung**

Eine Reibeinheit (1) für Kupplungen oder Bremsen besitzt eine progressive Kennlinie (50) mit einer mehrstufigen, gummielastischen Federanordnung (4). Stegfedern (20) definieren im unbelasteten Zustand der Reibeinheit (1) den Abstand (21) der Reibscheiben (2, 3) voneinander. Anschlagpolster (30) mit geringerer Bauhöhe sind zwischen den Stegfedern (20) auf einer der Reibscheiben (2, 3) angeordnet.

## Beschreibung

Die Erfindung bezieht sich auf eine Reibeinheit, betreffend eine Reibbelagfederung für Aggregate, wie Kupplungen oder Bremsen nach dem Oberbegriff des Anspruches 1.

Der Erfindung liegt die Aufgabe zugrunde, eine kostengünstige Reibeinheit vorzuschlagen, die, ausgehend von einer passiven Phase in eine aktive Phase, eine progressive Belagfeder-Kennlinie bei Aggregaten, wie Kupplungen oder Bremsen aufweist.

Die Erfindung löst diese Aufgabe entsprechend den kennzeichnenden Merkmalen des Anspruches 1.

Vorteilhafte Weiterbildungen der Erfindung sind den Unteransprüchen zu entnehmen.

Zur Erreichung einer progressiven Federkennlinie wird eine mindestens zweistufige Elastomerfeder, bestehend aus Stegfeder und Anschlagpolster verwendet. Die weich eingestellte Stegfeder gewährleistet eine flache Kennlinie bei geringer Federkraft im ersten Teil des Einfederungsweges. Bei Erreichen der Anschlagpolster wird die Kennlinie dann entsprechend steiler, so daß höhere Einfederungskräfte erforderlich sind. Durch Variation in der konstruktiven Ausführung von Stegfeder und Anschlagpolster sowie Art und Shore-Härte der eingesetzten Gummiqualität sind quasi beliebige progressive Kennlinien darstellbar.

Erfindungswesentlich ist, daß das Gesamtsystem ohne metallisches Trageblech zwischen den Reibscheiben bzw. Reibbelagteilen oder Reibbelaghälften arbeitet. Das heißt, im Anwendungsfall bei einer Kupplung ist jeder Reibbelag auf seiner Seite fest und direkt mit einem Belagträger bzw. einer Nabe bzw. einem Torsionsdämpfer verbunden. Es müssen somit keine durch Torsion ausgebildete Schub- und Zugspannungen vom Elastomer-Verbund aufgenommen werden. Das Federsystem wird also nur in axialer Richtung und zwar ausschließlich nur auf Druck beansprucht. Daraus resultiert eine besonders gleichmäßige Anpassung des Reibbelages an die Gegenmaterialien, wie Schwungscheibe, Druckplatte, was eine überraschend lange Standzeit der Reibbeläge bewirkt. Gleichzeitig liegt eine höhere Übertragungssicherheit der Reibmomente und eine erhebliche Kostenreduzierung gegenüber dem Stand der Technik vor

Das Federsystem nach dem Anspruch 11 läßt sich bei Integration der Brücken noch besser in einer Belagfederung mit einer Kennlinie, die eine stufenlose oder wenigstens nahezu stufenlose Progressivität besitzt, ausbilden. Dieses Federsystem läßt sich besser an den Reibbelag anbinden als bloße Elastomersegmente. Es ist sogar möglich, daß ein solcher Federkäfig zwischen Belaghälften bzw. Reibscheiben lose gelegt wird und beim Annieten der Reibscheiben an den Belagträgern, z. B. an einem Torsionsdämpfer einer Kupplungsscheibe, nur durch Klemmen von am Federkäfig angebrachten Fahnen oder Lappen zwischen die Belaglaschen gehalten wird.

Ausführungsbeispiele der Erfindung sind in der Zeichnung dargestellt. Es zeigt:
- Fig. 1: eine Reibeinheit im Teilschnitt,
- Fig. 2: einen vergrößert gezeichneten Ausschnitt II nach Fig. 1,
- Fig. 3: einen Schnitt III - III nach Fig. 2,
- Fig. 4: eine Stegfeder im Querschnitt, IV - IV nach Fig. 3,
- Fig. 5: ein Anschlagpolster nach Fig. 2 in perspektivischer Ansicht,
- Fig. 6: den Kennlinienverlauf des Federsystems der Reibeinheit nach Fig. 1,
- Fig. 7 - 11: weitere Anschlagpolster und Stegfedern,
- Fig. 12-16: Querschnitte VII - XI nach den Fig. 7 - 11,

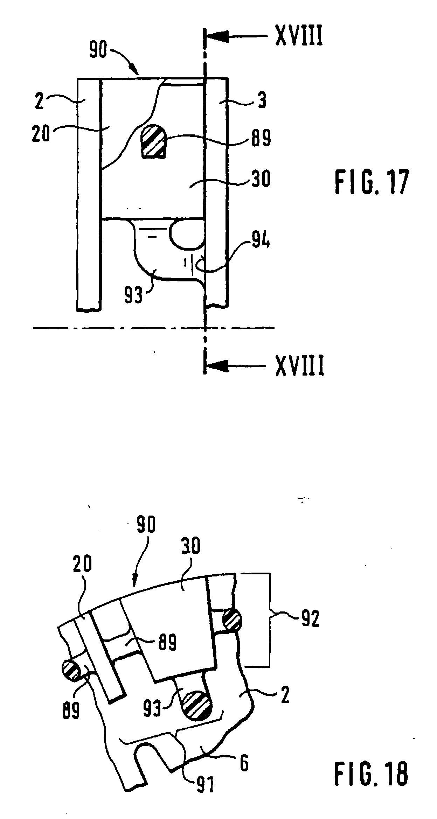

- Fig. 17: eine weitere Reibeinheit und
- Fig. 18: einen Schnitt XVIII - XVIII nach Fig. 17

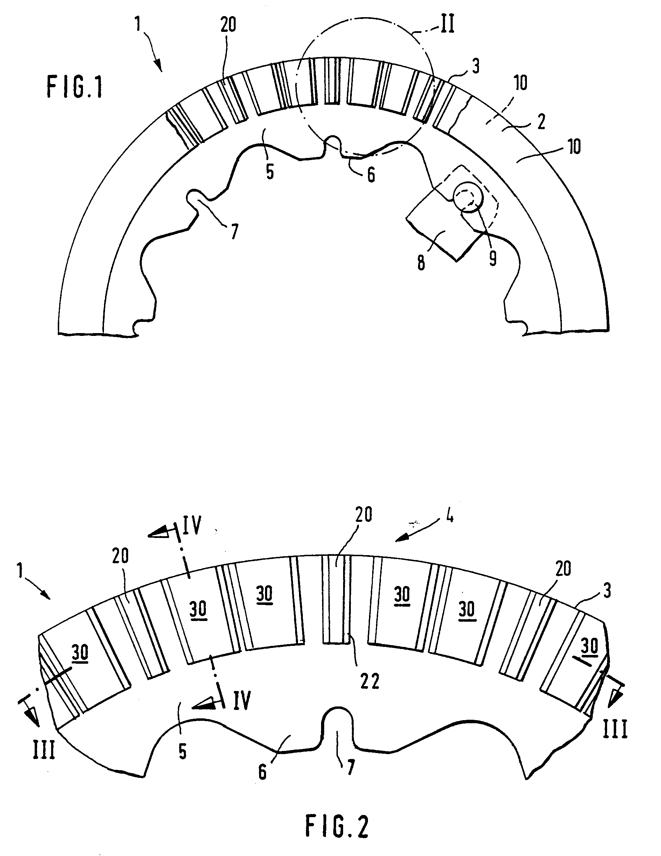

Nach den Figuren 1 bis 5 besteht eine Reibeinheit 1 aus zwei Reibscheiben 2, 3, einem mehrstufigen elastomeren Federsystem 4 und einem inneren Befestigungsring 5 mit Laschen 6 und Nuten 7 zur jeweiligen Befestigung an einer Nabe 8 bzw. Torsionsdämpfer über Nieten 9. Die Reibscheiben 2, 3 sind einstückig mit den Laschen 6 ausgebildet.

Die Reibeinheit 1 kann auch als Reibbelag und die Reibscheiben 2, 3 als Reibbelagteile oder -hälften verstanden werden.

Die Reibscheiben 2, 3 weisen jeweils eine durchgängige, nicht unterbrochene Ringfläche 10 aus reibwirksamen Werkstoff auf, und zwar zum Einsatz für Bremsen oder Kupplungen oder damit verwandten Aggregaten.

Zwischen den Reibscheiben 2, 3 liegt im gesamten Bereich der rückwärtigen bzw. inneren Ringflächen 11, 12 das mehrstufige elastomere Federsystem 4.
Dieses Federsystem 4 besteht aus regelmäßig, über den Umfang der Ringflächen 11, 12 angeordneten Stegfedern 20 und dazwischen liegenden, doppelt angeordneten Anschlagpolstern 30.

Die Stegfedern 20 und die Anschlagpolster 30 sind mit der Reibscheibe 3 fest verbunden, bspw. durch Kleben oder Vulkanisation.

Die Stegfedern 20 und die Anschlagpolster 30 bestehen aus einem geeigneten Kunststoff oder aus Gummi. Die Stegfedern 20 sind weich eingestellt und gewährleisten eine flache Kennlinie 25 bei geringer Federkraft im ersten Teil des später beschriebenen Einfederungsweges. Die Stegfedern 20 und Anschlagpolster 30 sind in der Form von radial angeordneten Rippen ausgebildet. Dabei dienen die Stegfedern 20 primär als Abstandhalter entsprechend ihrer Höhe 21 und garantieren zunächst einen Freiraum 31 zwischen den Anschlagpolstem 30 und der Ringfläche 11.

Die Stegfedern 20 weisen einen rechteckigen Querschnitt mit einer breiteren Basis 22 zur Befestigung auf der Ringfläche 12 auf. Die Stege 20 können auch wechselseitig mit den Reibscheiben 2, 3 verbunden sein.

Die Anschlagpolster 30 besitzen eine Höhe 32 sowie eine Arbeitsbreite 33 und einer linienförmigen Kontaktfläche 34. Diese Kontaktfläche 34 resultiert aus einem konvexen Abschnitt 35.

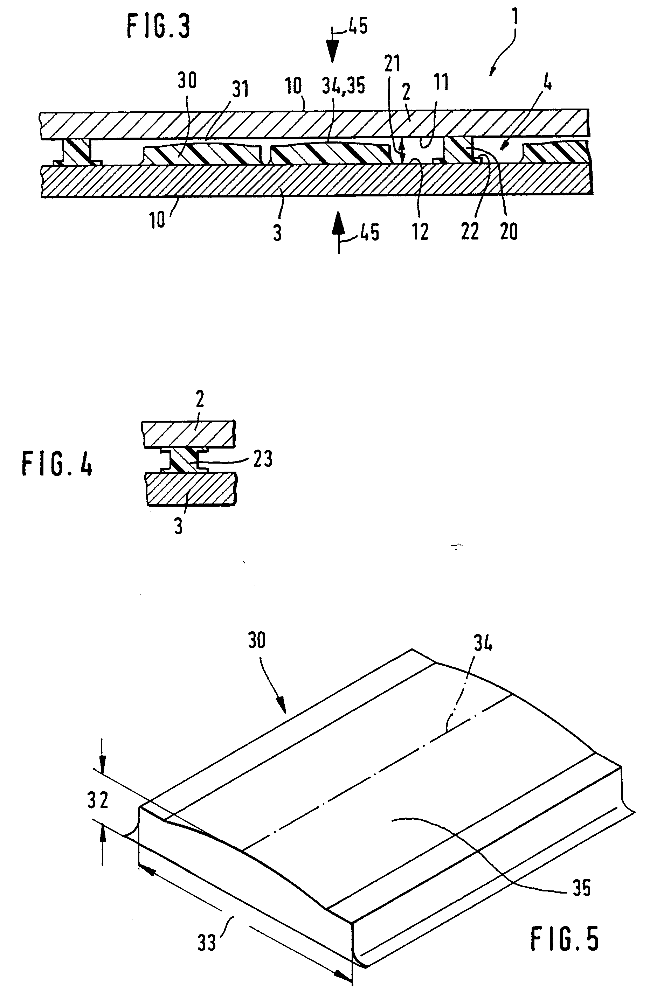

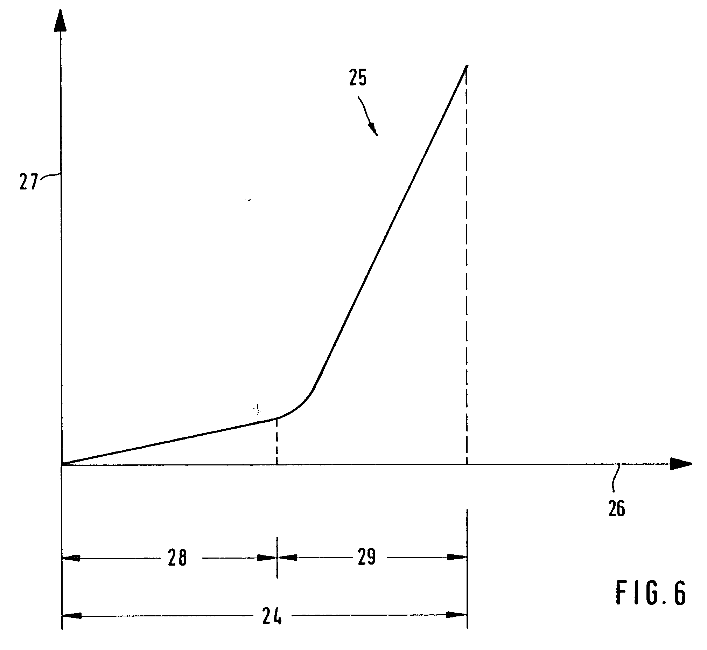

Bei Druckbeanspruchung des Reibringes 1 nach Fig. 3 in Richtung der Pfeile 45 durch eine nicht dargestellte Kupplungsdruckplatte wird nach Fig. 6 eine zweistufig Federkennlinie 25 erreicht. Hier ist über den Weg 26 die Kraft 27 aufgetragen.

Der flach ansteigende Abschnitt 28 stellt gemäß einer ersten Stufe die elastische Verformung der Stege 20 bis zum Anschlag der schwungradseitigen Ringfläche 11 an den konvexen Abschnitt 35 der Anschlagpolster 30 dar.
Es wird also bei geringer Kraft ein großer Weg von den Reibscheiben 2, 3 zurückgelegt.
Danach folgt gemäß einer zweiten Stufe ein progressives Ansteigen der Federkennlinie 25 durch Verformung der flächenmäßig wesentlich größeren Anschlagpolster 30 entsprechend der Arbeitsbreite 33 und der Stegfedern 20 entsprechend dem Abschnitt 29.
Der gesamte Federweg ist mit 24 bezeichnet.

Diese Federkennlinie 25 ist typisch für eine Kraftfahrzeugkupplung.

Die Federkennlinie 25 ist durch entsprechende Anordnung, Formgebung, Werkstoffwahl, Variation der Shore-Härte, der Stegfedern 20 und Anschlagpolster 30 variierbar.

Der Steg 23 nach Fig. 4 ist mit beiden Reibscheiben 2, 3 fest verbunden.

Die Anschlagpolster 30 können auch dieselbe Höhe 21 wie die Stegfedern 20 aufweisen. Dazu ist beispielsweise eine entsprechend spitz zulaufende Formgebung der Anschlagpolster 30 erforderlich.

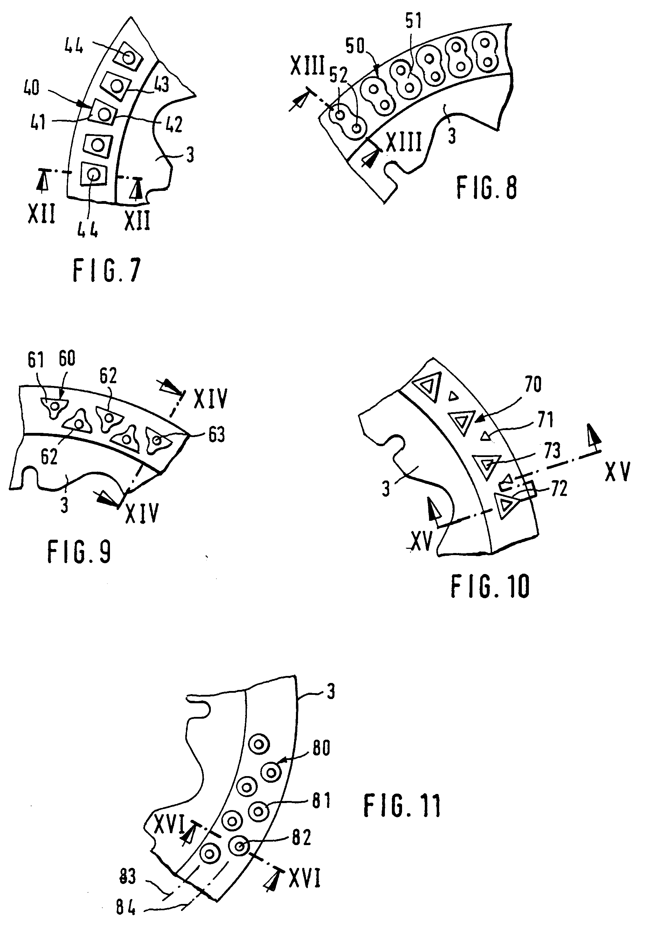

Entsprechend der Fig. 7 - 11 sind auf den Reibscheiben 3 geometrische Variationen von Integralpolstern 40, 50, 60, 70, 80 aufvulkanisiert.
Diese Integralpolster 40 sind wie die Integralpolster 50, 60, 70, 80 am gesamten Umfang der Reibscheibe 3 entsprechend der gezeichneten Teilung vorgesehen.

Die Integralpolster 40, 50, 60, 70, 80 weisen - genauso wie die Stegfeder 20 und das Anschlagpolster 30 - die zu Fig. 6 beschriebene zweistufige Federkennlinie 25 auf.
Die Integralpolster 40, 50, 60, 70, 80 sind also eine Kombination von Stegfeder 20 und Anschlagpolster 30.
Die Zapfen 44, 52, 63, 73, 82 bzw. 71 bewirken den Abschnitt 28 (Fig. 6) und die Grundkörper 41, 51, 61, 72, 81 sind maßgebend für den Abschnitt 29.
Der Fertigungsaufwand der Integralpolster 40, 50, 60, 70, 80 ist günstig. Außerdem ist durch die Formenvielfalt eine Anpassung an vorgegebene Parameter ohne weiteres, bzw. durch Kombination der Integralpolster 40, 50, 60, 70, 80 bei einem Reibring 1 möglich.

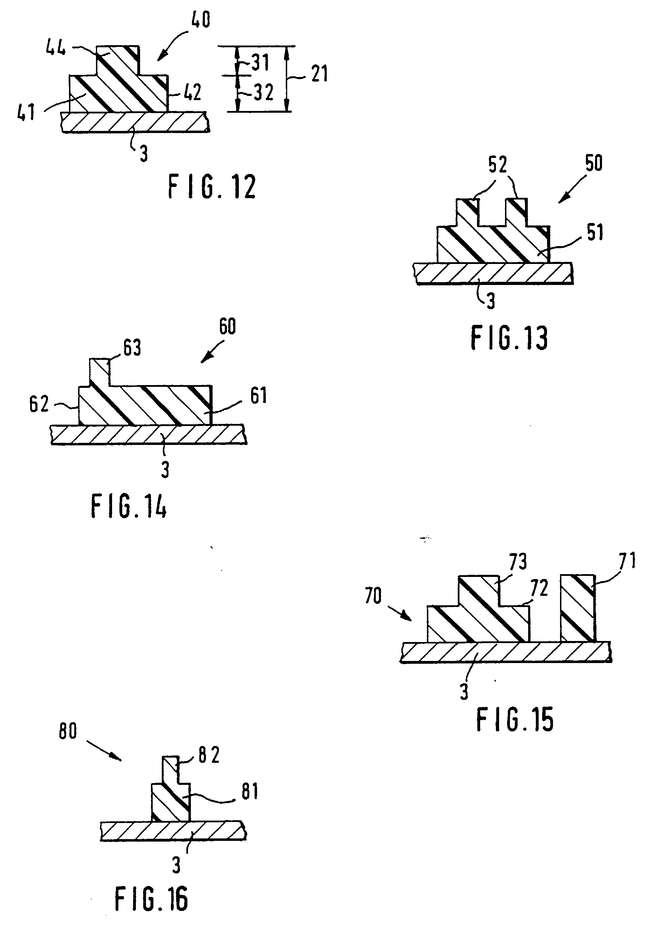

Die Integralpolster 40 weisen nach den Fig. 7, 12 einen keilförmigen Grundkörper 41 auf Der Grundkörper 41 ist wechselseitig auf die Reibscheibe 3 aufvulkanisiert. In Umfangsrichtung wechseln die kurze Seite 42 mit einer langen Seite 43 ab. Einstückig verbunden mit dem Grundkörper 41 ist der mittig angeordnete, kreisförmige Zapfen 44.

Entsprechend den Fig. 8 und 13 bestehen die Integralpolster 50 auf der Reibscheibe 3 aus brillenförmigen Grundkörpern 51 mit jeweils zwei kreisrunden Zapfen 52.

Nach den Fig. 9 und 14 weisen die Integralpolster 60 einen giebelförmig geschwungenen Grundkörper 61 mit gerader Basis 62 sowie dem kreisförmigen Zapfen 63 auf Die Grundkörper 61 sind mit ihrer Basis 62 wechselseitig auf den Reibring 3 aufvulkanisiert.

Nach den Fig. 10 und 15 sind auf den Reibscheiben 3 gleichseitige, dreieckige Integralpolster 70 und ebenfalls dreieckige, gleichseitige Stegfedern 71 aufvulkanisiert. Die Grundkörper 72 der Integralpolster 70 besitzen zur Form der Gründkörper 72 symmetrische, jedoch kleiner ausgebildete Zapfen 73. Die Position der Stegfedern 71 liegt jeweils auf Lücke zwischen den Integralpolstern 70 und zwar entsprechend der halben Teilung der Teilung der Integralpolster 70.

Nach den Fig. 11 und 16 sind auf der Reibscheibe 3 Integralpolster 80 mit kreisförmigem Grundkörper 81 und kleiner dazu ausgebildeten, ebenfalls kreisförmigen Zapfen 82 aufvulkanisiert. Die Integralpolster 80 liegen zueinander versetzt auf zwei Kreisringen 83, 84.

Die Zapfen 44, 52, 63, 73, 82 bzw. die Stegfedern 71 definieren entsprechend den Stefgedern 20 bzw. 23 nach den Fig. 1 - 4 den axialen Abstand 21 zwischen den Reibscheiben 2, 3. Die Zapfen 44, 52, 63, 73, 82 bzw. die Stegfedern 71 können entweder nur an der Reibscheibe 2 anliegen oder auch mit dieser fest verbunden sein.

Im Rahmen der Erfindung liegt auch eine Ausführung, wonach das Federsystem 4, 40 separat als Käfig ausgebildet ist. Dieser Käfig ist dann mit keiner der Reibscheiben 2, 3 durch Vulkanisation oder ähnliches verbunden, sondern an einer der Reibscheiben 2, 3 mitnehmend in Drehrichtung.

Ein elastomeres Federsystem 90 ist als Käfig 91 mit Brücken 89 ausgebildet und außerhalb des Anpreßbereiches 92 mit der Reibscheibe 3 bei 94 fest verbunden. Einstückig mit den Anschlagpolstern 30 verbundene Stege 93 sind an der Reibscheibe 3 anvulkanisiert.
Dieses Federsystem 90 ist in einfacher Weise mit der Reibscheibe 2 oder auch 3 zu verbinden. Es ist sogar möglich, daß dieses Federsystem 90 bzw. Federkäfig 91 zwischen die Reibscheiben 2, 3 bzw. Belaghälften lose gelegt wird und beim Annieten der Reibscheiben 2, 3 an den Belagträger, z. B. an den Torsionsdämpfer einer Kupplungsscheibe nur durch Klemmen von am Federsystem 90 angebrachten Fahnen oder Lappen zwischen die bzw. den Belaglaschen 6 gehalten wird.

Die Zusammenfassung ist Teil der Beschreibung.

## Patentansprüche

1. Reibeinheit (1) betreffend eine Reibbelagfederung für Aggregate, wie Kupplungen oder Bremsen,
dadurch gekennzeichnet,
daß die Reibeinheit (1) eine progressive Kennlinie (25) aufgrund einer mehrstufigen Federanordnung (20, 30) aufweist,
wobei nach einem bestimmten zurückgelegten Weg zweier gegeneinander beweglichen Reibscheiben (2, 3) zusätzlich zur ersten Feder (20) wenigstens eine zweite Feder (30) zum Einsatz kommt, indem die Reibscheiben (2, 3) durch das mehrstufige, elastomere Federsystem (4; 40) gegenseitig abgestützt sind, wobei dieses Federsystem (4; 40) zwischen den Reibscheiben (2, 3) liegt.

2. Reibeinheit nach Anspruch 1,
dadurch gekennzeichnet,
daß wenigstens eine der Reibscheiben (2, 3) mit gummiartigen Stegfedern (20) und in den Zwischenräumen zwischen den Stegfedern (20) mit gummiartigen Anschlagpolstern (30) oder mit kombinierten Feder- und Anschlagpolstern, Integralpolster (40) genannt versehen sind und
jede Reibscheibe (2, 3) durch separate Verbindungsmittel (9) mit einer Nabe (8) verbunden ist.

3. Reibeinheit nach Anspruch 2,
dadurch gekennzeichnet,
daß die Stegfedern (20) oder die Integralpolster (40) mit ihren Zapfen (44) in unbelastetem Zustand des Reibringes (1) den Abstand (21) der Reibscheiben (2, 3) festlegen und die Stegfedern (20) und die Anschlagpolster (30) eine, voneinander unterschiedliche Federcharakteristik (50) aufweisen, bzw. die Grundkörper (41) und die Zapfen (44) der Integralpolster (40),
wobei die Anschlagpolster (30) bzw. die Grundkörper (41) bezüglich ihrer Höhe (32) um einen Freiraum (31) kürzer sind, als die Stegfedern (20) bzw. kleiner sind als der vorgenannte Abstand (21).

4. Reibeinheit nach Anspruch 2 oder 3,
dadurch gekennzeichnet,
daß die Stegfeder (20) bzw. die Zapfen (44) eine weiche Werkstoffcharakteristik aufweist.

5. Reibeinheit nach Anspruch 2,
dadurch gekennzeichnet,
daß die Stegfedern (20) und die Anschlagpolster (30) radial oder tangential oder abweichend davon zur Drehachse des Aggregats angeordnet sind.

6. Reibeinheit nach Anspruch 2,
dadurch gekennzeichnet,
daß die Anschlagpolster (30) eine geringere Höhe (32), jedoch eine wesentlich größere Arbeitsbreite (33) als die Stegfedern (20) aufweisen.

7. Reibeinheit nach Anspruch 2,
dadurch gekennzeichnet,
daß die gummieartigen Integralpolster (40, 50, 60, 70, 80) aus einem Grundkörper (41, 51, 61, 72, 81) und einem einstückig damit verbundenen Zapfen (44, 52, 63, 73, 82) bestehen,
wobei der Zapfen (44, 52, 63, 73, 82) die Funktion und die Federcharakteristik von Stegfedern (20) und die Grundkörper (41, 51, 61, 72, 81) die der Anschlagpolster (30) aufweisen,
der Querschnitt des Grundkörpers (41, 51, 61, 72, 81) keil-, brillen-, giebel-, dreieck- oder kreisförmig und
der Querschnitt der Zapfen (44, 52, 63, 73, 82) gerundet oder eckig ist.

8. Reibeinheit nach Anspruch 2,
dadurch gekennzeichnet,
daß die Stegfedern (20) bzw. die Anschlagpolster (30) bzw. die gummieartigen Integralpolster (50, 60, 70, 80) mit beiden Reibscheiben (2, 3) fest verbunden sind oder nur mit einer Reibscheibe (2 bzw. 3) fest verbunden sind.

9. Reibeinheit nach Anspruch 1,
dadurch gekennzeichnet,
daß jede Reibscheibe (2, 3) eine ununterbrochene Ringfläche (10) für den Reibschluß und einen nach innen liegenden Befestigungsring (5) zur Befestigung an einer Nabe aufweisen und
die Reibscheiben (2, 3) mit den Befestigungsringen (5) einstückig ausgebildet sind.

10. Reibeinheit nach Anspruch 9,
dadurch gekennzeichnet,
daß der Befestigungsring (5) Laschen (6) mit Nuten (7) aufweist.

11. Reibeinheit nach Anspruch 1,
dadurch gekennzeichnet,
daß das elastomere Federsystem (90) als kreisförmiger Käfig (91) mit Brücken (89) ausgebildet ist,
wobei die Brücken (89) die Stegfedern (20) mit den Polstern (30) einstückig verbinden.

12. Reibeinheit nach Anspruch 11,
dadurch gekennzeichnet,
daß mit dem Federsystem (90) verbundene, einstückige Stege (93) mit wenigstens einer Reibscheibe (2, 3) verbunden ist.
